# EUROPÄISCHE PATENTSCHRIFT

(11) **EP 2 410 210 B1**
(45) Veröffentlichungstag und Bekanntmachung des Hinweises auf die Patenterteilung: **27.03.2013**
(21) Anmeldenummer: 10007631.4
(22) Anmeldetag: 22.07.2010
(51) Int. Cl.: F16H 57/04, F28D 15/02, F04D 29/28

(54) **Getriebe für industrielle Anwendungen**
Transmission for industrial applications
Engrenage pour applications industrielles

(43) Veröffentlichungstag der Anmeldung: 25.01.2012
(73) Patentinhaber: Siemens Aktiengesellschaft, 80333 München (DE)
(72) Erfinder: Kücükyavuz, Ali Kemal, 59192 Bergkamen (DE); Liesegang, Maik, 46397 Bocholt (DE)

(56) Entgegenhaltungen:
- EP-A2- 1 574 757
- DE-A1- 3 705 689
- DE-A1-102005 031 197
- JP-A- 58 034 296
- JP-A- 60 113 895

## Beschreibung

Industriegetrieben kommt in industriellen Verarbeitungs- und Fertigungsprozessen vielfach eine zentrale Bedeutung zu. An Industriegetriebe wird eine breite Palette von komplexen Anforderungen gestellt. Beispielsweise ist eine dieser Anforderungen eine zuverlässige Funktion über eine lange Nutzungsdauer bei minimalem Wartungsaufwand. Industrielle Verarbeitungs- und Fertigungsprozesse beeinträchtigende Getriebeausfälle können teuer werden, beispielsweise aufgrund kostspieliger Stillstandszeiten.

In DE 10 2006 020 801 A1 ist ein Baukasten von Getriebekühlvorrichtungen beschrieben, in dem eine Mehrzahl von Deckeln mit einer Mehrzahl von Modulen zu einer Vielzahl von Kühlvorrichtungen unterschiedlicher Kühlleistung zum Anbau an einem Getriebe kombinierbar ist. Die Kühlvorrichtungen werden auf die Montageöffnung des Getriebes aufgesetzt und nehmen jeweils im Innern des Getriebes spritzendes Schmieröl auf und leiten die im Schmieröl befindliche Wärme weiter an einen äußeren Kühlkreislauf.

Sowohl DE 36 06 963 C2 als auch US 5,072,784 offenbaren ein Getriebe mit einem Wärmetauscher, der einen Gehäusedeckel bildet und mit einer innerhalb eines Getriebegehäuses angeordneten Schmierstoffpumpe zur Förderung von Schmierstoff aus einem Schmierstoffsumpf verbunden ist. Die Schmierstoffpumpe ist in einem Schmierstoffverteilungssystem zwischen dem Schmierstoffsumpf und dem Wärmetauscher angeordnet.

Aus DE 103 15 684 A1 ist ein Getriebe bekannt, bei dem ein Rohrwärmetauscher als Ölkühler verwendet wird, der in ein Getriebegehäuse integriert ist. Durch eine Ölpumpe, die dem Rohrwärmetauscher nachgeschaltet ist, wird Öl aus einem Ölsumpf abgesaugt und umströmt dabei den Rohrwärmetauscher. Nach einer Kühlung des Öls im Rohrwärmetauscher wird das Öl durch die Ölpumpe zu Schmierungsstellen innerhalb des Getriebes gefördert.

In DE 10 2004 022 863 A1 ist ein Getriebe beschrieben, das ein durch einen Gehäusedeckel dicht und lösbar verschlossenes Gehäuse aufweist. Darüber hinaus umfaßt der Deckel eine Kühlfinger oder Kühlrippen aufweisende Kühlvorrichtung, bei der Luft als Kühlmedium verwendet wird.

Bei dem aus DE 10 2007 024 512 A1 bekannten Getriebe ist eine aus langgestreckten Kühlrohren geformte Kühlpatrone durch eine Öffnung eines Getriebegehäuses gesteckt und mit einem Grundkörper, von dem die Kühlrohre ausgehen, in die Öffnung eingeschraubt. Die Kühlpatrone wird im Bereich eines Ölsumpfes innerhalb des Getriebes angeordnet. Dies bedeutet jedoch mitunter Einschränkungen hinsichtlich Dimensionierung und Auswahl verwendbarer Kühlvorrichtungen.

In US 6,830,096 ist ein Differentialgetriebe beschrieben, bei dem sich eine Heatpipe zunächst horizontal durch einen Schmierstoffsumpf und dann vertikal innerhalb eines Gehäuse des Differentialgetriebes erstreckt. Außerhalb des Gehäuses sind an der Heatpipe Kühlrippen befestigt, über die ein Wärmeaustausch zur Umgebung des Differentialgetriebes erfolgt.

Aus DE 40 10 333 A1 ist eine Schmieröl-Kühlvorrichtung eines Leistungsübertragungssystems bekannt, das ein Gehäuse zur Aufnahme von wenigstens zwei miteinander kämmenden Zahnrädern und von Schmieröl umfaßt. Dabei taucht nur ein Teil eines jeden Zahnrads in das Schmieröl ein. Am Gehäuse ist ein mit einer Heiz- und einer Kühlsektion versehenes Wärmerohr befestigt. Das Gehäuse umfaßt einen seitlich eines Zahnrads angeordneten Ölbehälter, dem durch Zentrifugalwirkung Schmieröl zugeführt wird, und eine Anschlußöffnung für den Ölbehälter, die sich bei stillstehenden Zahnrädern an einer oberhalb eines Schmierölpegels liegenden Stelle befindet. Die Heizsektion des Wärmerohrs ist durch die Anschlußöffnung in den Ölbehälter eingesetzt.

JP 60113895 A zeigt ein Untersetzungsgetriebe mit einem außerhalb eines Getriebegehäuses angeordneten Konvektionskühlkörper, in dem eine Kondensation eines Kühlmediums zur Kühlung eines Schmierstoffsumpfes des Untersetzungsgetriebes erfolgt, und mit einem mit einer Getriebewelle verbundenen Lüfter, in dessen Strömungsbereich der Konvektionskühlkörper angeordnet ist.

Der vorliegenden Erfindung liegt die Aufgabe zugrunde, ein Getriebe für industrielle Anwendungen mit einem effizienten Kühlsystem anzugeben, das auch bei kompakten Abmessungen eine schnelle Abfuhr großer Wärmemengen ermöglicht.

Diese Aufgabe wird erfindungsgemäß durch ein Getriebe mit den in Anspruch 1 angegebenen Merkmalen gelöst. Vorteilhafte Weiterbildungen der vorliegenden Erfindung sind in den abhängigen Ansprüchen angegeben.

Das erfindungsgemäße Getriebe umfaßt zumindest eine Antriebswelle und zumindest einer Abtriebswelle, die durch eine jeweilige Öffnung an einem Getriebegehäuse treten. Außerdem sind zumindest ein mit der Antriebswelle verbundenes Zahnrad und zumindest ein mit der Abtriebswelle verbundenes Zahnrad vorgesehen, die mittelbar oder unmittelbar im Eingriff miteinander stehen. Des weiteren umfaßt das Getriebe ein Bündel von mehreren Heatpipes, die jeweils an einem ersten Abschnitt im Bereich eines Schmierstoffsumpfs angeordnet und mit diesem thermisch verbunden sind. An den ersten Abschnitten der Heatpipes erfolgt jeweils eine Verdunstung eines Heatpipe-Mediums, mit dem die Heatpipes gefüllt sind. Außerhalb des Getriebegehäuses ist ein Konvektionskühlkörper angeordnet, der mit zweiten Abschnitten der Heatpipes verbunden ist. An den zweiten Abschnitten der Heatpipes erfolgt jeweils eine Kondensation des Heatpipe-Mediums. Darüber hinaus ist ein mit der Antriebswelle oder Abtriebswelle verbundenen Lüfter vorgesehen, in dessen Strömungsbereich der Konvektionskühlkörper angeordnet ist. Das erfindungsgemäße Getriebe weist somit ein weitgehend wartungsfreies und äußerst effektives Kühlsystem auf.

Die vorliegende Erfindung wird nachfolgend an Ausführungsbeispielen anhand der Zeichnung näher erläutert. Es zeigt
- Figur 1: ein erfindungsgemäßes Getriebe mit einer Kegelradstufe und drei Stirnradstufen im Längsschnitt,
- Figur 2: das Getriebe gemäß Figur 1 in einer Ansicht von einer antriebsseitigen Stirnseite,
- Figur 3: einen Abschnitt eines Heatpipe-Bündels des in Figur 1 dargestellten Getriebes,
- Figur 4: ein erfindungsgemäßes Getriebe mit drei Planetenstufen und einer Kegelradstufe,
- Figur 5: das Getriebe gemäß Figur 4 in einer Querschnittsdarstellung im Bereich eines ersten HeatpipeBündels, das zwischen einer ersten und zweiten Planetenstufe angeordnet ist,
- Figur 6: das Getriebe gemäß Figur 4 in einer Querschnittsdarstellung im Bereich eines zweiten HeatpipeBündels, das an der Kegelradstufe angeordnet ist,
- Figur 7: eine perspektivische Darstellung des ersten Heatpipe-Bündels des in Figur 4 dargestellten Getriebes,
- Figur 8: eine perspektivische Darstellung des zweiten Heatpipe-Bündels des in Figur 4 dargestellten Getriebes,
- Figur 9: einen Lüfter für die Getriebe gemäß Figur 1 und 4 in perspektivischer Darstellung,
- Figur 10: den Lüfter gemäß Figur 9 im Querschnitt.

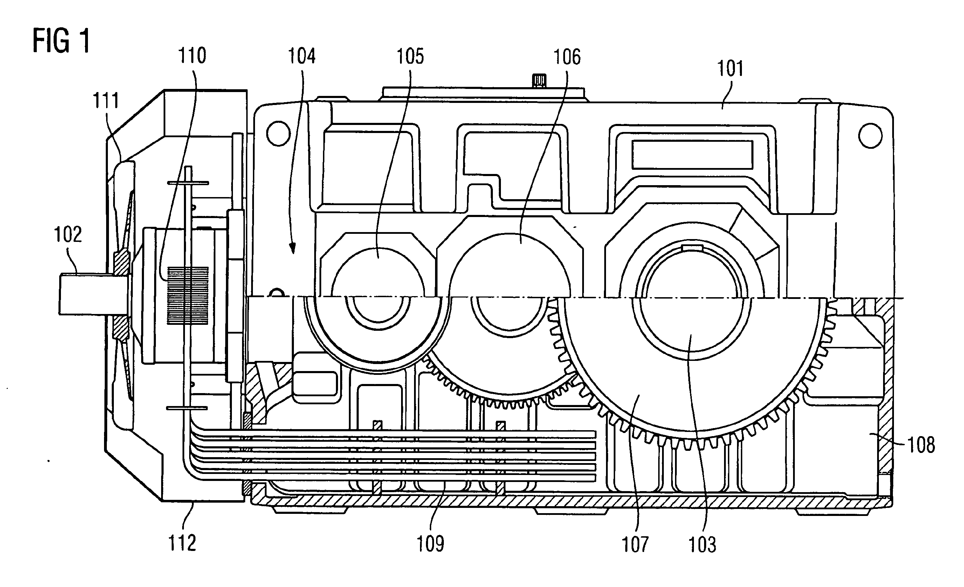

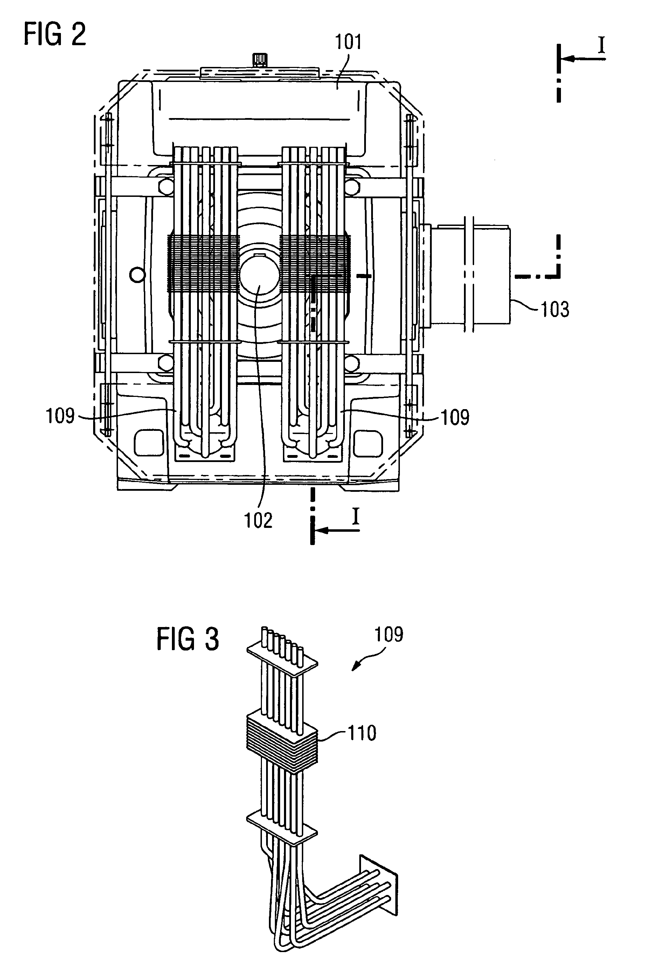

Das in Figur 1 und 2 dargestellte Getriebe für industrielle Anwendungen umfaßt eine Antriebswelle 102 und eine Abtriebswelle 103, die jeweils durch eine Öffnung an einem Getriebegehäuse 101 treten. Die Antriebswelle 102 ist mit einer Kegelradstufe 104 verbunden, die ein Kegelrad und ein Kegelritzel umfaßt. Die Kegelradstufe 104 ist über eine erste Stirnradstufe 105 und eine zweite Stirnradstufe 106 mit einer dritten Stirnradstufe 107 verbunden, die drehfest mit der Abtriebswelle 103 verbunden ist. Die erste Stirnradstufe 104 umfaßt ein Stirnrad, das drehfest mit dem Kegelritzel der Kegelradstufe 104 verbunden ist. Das Stirnrad der ersten Stirnradstufe 104 kämmt mit einem Ritzel einer Zahnrad-Ritzel-Kombination der zweiten Stirnradstufe 105, deren Zahnrad wiederum mit einem Stirnrad der dritten Stirnradstufe 107 kämmt.

Beidseitig der Antriebswelle ist jeweils ein Bündel 109 von mehreren Heatpipes angeordnet, die jeweils an einem ersten Ende im Bereich eines Schmierstoffsumpfs 108 angeordnet und mit Schmierstoff im Schmierstoffsumpf 108 thermisch gekoppelt sind. Außerhalb des Getriebegehäuses 101 sind an zweiten Enden der Heatpipes innerhalb einer Motorlaterne 112 zwei Konvektionskühlkörper 110 angeordnet (siehe auch Figur 3). An den ersten Enden der Heatpipes erfolgt jeweils eine Verdunstung eines Heatpipe-Mediums, während an den zweiten Enden der Heatpipes jeweils eine Kondensation des Heatpipe-Mediums erfolgt. Die Konvektionskühlkörper 110 weisen jeweils mehrere Kühllamellen auf. Grundsätzlich könnte ein Konvektionskühlkörper 110 auch in einen Gehäusedeckel integriert sein.

Im vorliegenden Ausführungsbeispiel ist ein Lüfter 111, in dessen Strömungsbereich die Konvektionskühlkörper 110 angeordnet sind, mit der Antriebswelle 102 drehfest verbunden. Auf diese Weise kann ein elektrischer Lüfterantrieb entfallen. Grundsätzlich könnte der Lüfter 111 alternativ auch durch die Abtriebswelle 103 angetrieben sein. Darüber hinaus können an den Konvektionskühlkörpern 110 auch hinsichtlich ihrer Drehzahl temperaturgeregelte Lüfter vorgesehen sein. Bei dem in Figur 1 und 2 dargestellten Getriebe sind zur Kühlung ausschließlich die beiden Heatpipe-Bündel 109 mit den Konvektionskühlkörpern 110 und der Lüfter 111 vorgesehen.

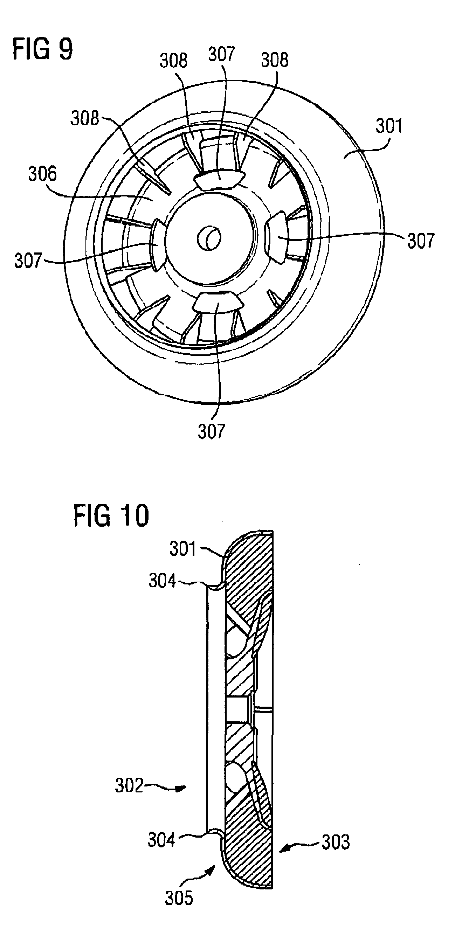

In Figur 9 und 10 ist ein Lüfter für ein Getriebe gemäß Figur 1 und 2 im Detail dargestellt. Der Lüfter weist an einer ersten Stirnseite 302 eine integrierte rotationssymmetrische Deckscheibe 301 auf, die als ein Viertel eines hohlen Torus ausgestaltet ist. Hierdurch ist an der ersten Stirnseite 302 an einer äußeren zylindrischen Mantelfläche 304 des Lüfters, die sich zwischen der ersten Stirnseite 302 und einer zweiten Stirnseite 303 erstreckt, eine Abrundung gebildet. Durch die Deckscheibe 301 weist der Lüfter im Querschnitt einen viertelkreisförmigen Abschnitt 305 auf, an den sich die äußere zylindrische Mantelfläche 304 anschließt.

Darüber hinaus weist der Lüfter in einem inneren radialen Abschnitt eine Scheibe 306 mit mehreren um einen ersten vorgebbaren Winkel versetzt zueinander angeordneten Durchtrittsöffnungen 307 auf. Im vorliegenden Ausführungsbeispiel sind die Durchtrittsöffnungen 307 jeweils um 90 Grad zueinander versetzt angeordnet. Außerdem ist die Scheibe 306 durch mehrere um einen zweiten vorgebbaren Winkel versetzt zueinander angeordnete sich radial nach außen ersteckende Lamellen 308 mit der Deckscheibe 301 verbunden. Entsprechend Figur 9 sind die Lamellen 308 jeweils um 30 Grad zueinander versetzt angeordnet.

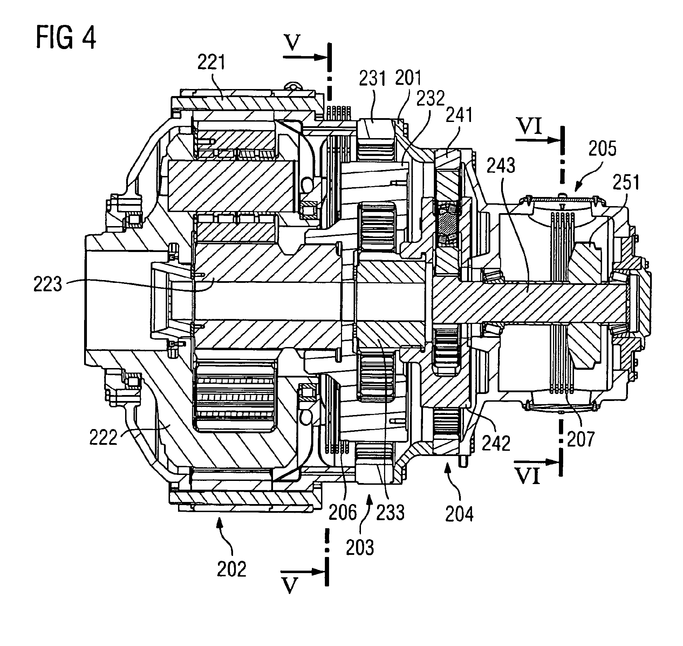

Das in Figur 4 dargestellte Getriebe für industrielle Anwendungen umfaßt drei Planetenstufen 202-204 und eine Kegelradstufe 205, die in einem gemeinsamen Getriebegehäuse 201 angeordnet sind. Die Planetenstufen umfassen jeweils ein feststehendes Hohlrad 221, 231, 241, einen mehrere Planeten aufnehmenden Planetenträger 222, 232, 242 und ein Sonnenrad 223, 233, 243. Der Planetenträger 222 einer ersten Planetenstufe 202 ist mit einer Antriebswelle verbindbar, während das Sonnenrad 243 einer dritten Planetenstufe 204 mit einem Kegelrad 251 der abtriebsseitig angeordneten Kegelradstufe 205 drehfest verbunden ist. Das Sonnenrad 223 der ersten Planetenstufe 202 ist mit dem Planetenträger 232 einer zweiten Planetenstufe 203 verbunden, deren Sonnenrad 233 wiederum mit dem Planetenträger 242 der dritten Planetenstufe 204 verbunden ist.

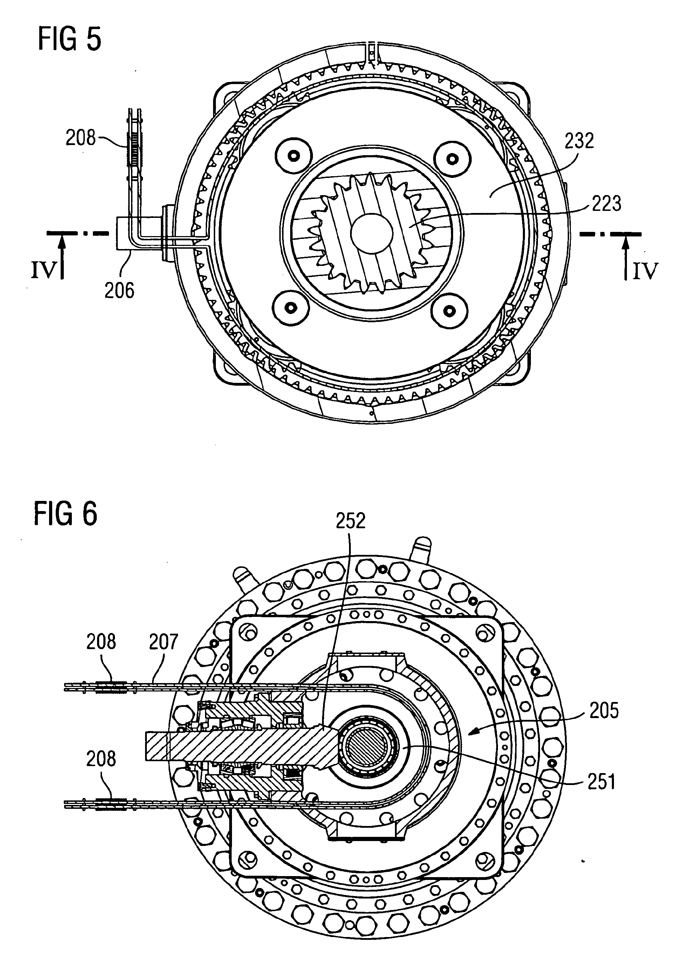

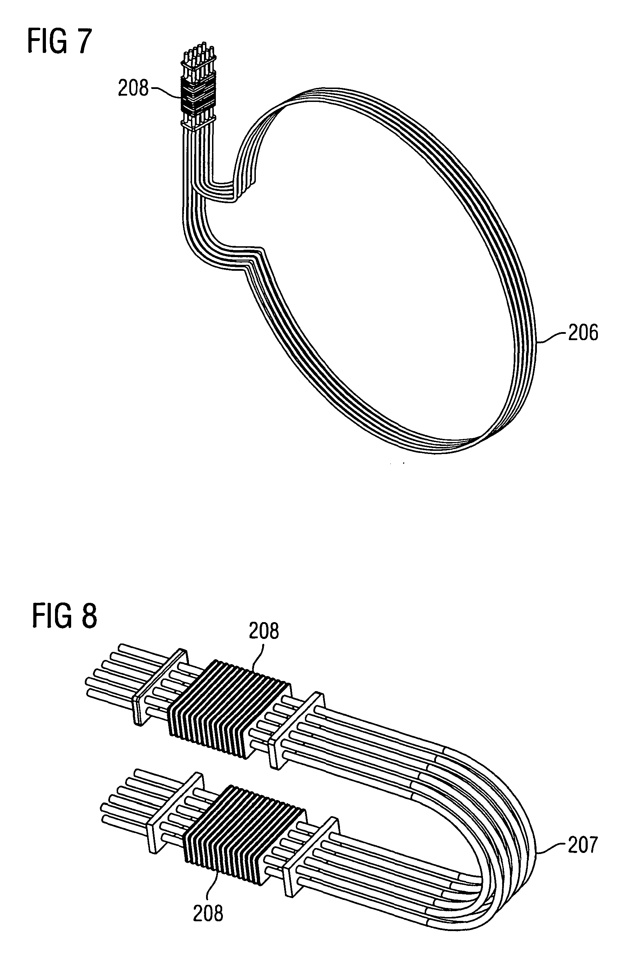

Wie auch aus der Querschnittsdarstellung gemäß Figur 5 hervorgeht, ist ein erstes Heatpipe-Bündel 206 axial zwischen der ersten Planetenstufe 202 und der zweiten Planetenstufe 203 angeordnet. Ein erster ringartiger Abschnitt des ersten Heatpipe-Bündels 206 ist innerhalb des Getriebegehäuses 201 angeordnet und umgibt radial den Planetenträger 232 der zweiten Planetenstufe 203. An den ersten ringförmigen Abschnitt des ersten Heatpipe-Bündels 206 schließt sich ein zweiter Abschnitt an, der außerhalb des Getriebegehäuses 201 endet (siehe auch Figur 7). An einem Ende des zweiten Abschnitts ist ein Konvektionskühlkörper 208 angeordnet. Der Konvektionskühlkörper 208 ist in einem Strömungsbereich eines Lüfters angeordnet, der mit einer Antriebswelle oder Abtriebswelle des Getriebes verbunden und entsprechend Figur 9 und 10 ausgestaltet ist.

Zumindest ein Teil des ersten Abschnitts des ersten Heatpipe-Bündels 206 ist in einen Schmierstoffsumpf an einem Bodenabschnitt des Getriebegehäuses 201 eingetaucht und mit Schmierstoff im Schmierstoffsumpf thermisch gekoppelt. Am ersten Abschnitt des ersten Heatpipe-Bündels 206 erfolgt eine Verdunstung eines Heatpipe-Mediums, während am zweiten Abschnitt eine Kondensation des Heatpipe-Mediums erfolgt.

Der Querschnittsdarstellung gemäß Figur 6 ist zu entnehmen, daß ein zweites U-förmiges Heatpipe-Bündel 207 an der Kegelradstufe 205 angeordnet ist. Neben dem Kegelrad 251 umfaßt die Kegelradstufe 205 ein mit einer Abtriebswelle verbundenes Kegelritzel auf 252, das mit dem Kegelrad 251 in Eingriff steht. Das zweite Heatpipe-Bündel 207 umfaßt einen ersten halbringartigen Abschnitt der sich innerhalb des Getriebegehäuses 201 erstreckt und das Kegelrad 251 radial umgibt. An den ersten halbringförmigen Abschnitt des zweiten Heatpipe-Bündels 207 schließen sich zwei zweite Abschnitte an, der außerhalb des Getriebegehäuses 201 enden (siehe auch Figur 8). An einem Ende des zweiten Abschnitts ist jeweils ein Konvektionskühlkörper 208 angeordnet. Die Konvektionskühlkörper 208 sind jeweils in einem Strömungsbereich eines Lüfters angeordnet, der mit einer Antriebswelle oder Abtriebswelle des Getriebes verbunden und entsprechend Figur 9 und 10 ausgestaltet ist.

Der erste Abschnitt des zweiten Heatpipe-Bündels 207 ist in einen Schmierstoffsumpf an einem Bodenabschnitt des Getriebegehäuses 201 eingetaucht und mit Schmierstoff im Schmierstoffsumpf thermisch gekoppelt. Analog zu obigen Ausführungen erfolgt am ersten Abschnitt des zweiten Heatpipe-Bündels 207 eine Verdunstung eines Heatpipe-Mediums, während das Heatpipe-Medium an den beiden zweiten Abschnitten kondensiert.

Die Anwendung der vorliegenden Erfindung ist nicht auf die beschriebenen Ausführungsbeispiele beschränkt.

## Patentansprüche

1. Getriebe für industrielle Anwendungen mit
- zumindest einer Antriebswelle (102) und zumindest einer Abtriebswelle (103), die durch eine jeweilige Öffnung an einem Getriebegehäuse (101) treten,
- zumindest einem mit der Antriebswelle (102) verbundenen Zahnrad und zumindest einem mit der Abtriebswelle (103) verbundenen Zahnrad, die mittelbar oder ummittelbar im Eingriff miteinander stehen,
- einem Bündel von mehreren Heatpipes (109), die jeweils an einem ersten Abschnitt im Bereich eines Schmierstoffsumpfs (108) angeordnet und mit diesem thermisch verbunden sind, wobei an den ersten Abschnitten der Heatpipes (109) jeweils eine Verdunstung eines Heatpipe-Mediums erfolgt,
- einem außerhalb des Getriebegehäuses (101) angeordneten Konvektionskühlkörper (110), der mit zweiten Abschnitten der Heatpipes (109) verbunden ist, wobei an den zweiten Abschnitten der Heatpipes (109) jeweils eine Kondensation des Heatpipe-Mediums erfolgt,
- einem mit der Antriebswelle (102) oder Antriebswelle (103) verbundenen Lüfter (111), in dessen Strömungsbereich der Konvektionskühlkörper (110) angeordnet ist, wobei der Konvektionskühlkörper (110) in einen Gehäusedeckel integriert ist.

2. Getriebe nach Anspruch 1,
bei dem der Konvektionskühlkörper (110) Kühllamellen aufweist.

3. Getriebe nach einem der Ansprüche 1 und 2,
bei dem ein hinsichtlich seiner Drehzahl temperaturgeregelter Lüfter vorgesehen ist.

4. Getriebe nach einem der Ansprüche 1 bis 3,
bei dem der Lüfter (111) an einer ersten Stirnseite (302) eine integrierte rotationssymmetrische Deckscheibe (301) aufweist, die als ein Viertel eines hohlen Torus ausgestaltet ist, durch den an der ersten Stirnseite (302) an einer äußeren zylindrischen Mantelfläche (304) des Lüfters (111), die sich zwischen der ersten Stirnseite (302) und einer zweiten Stirnseite (303) erstreckt, eine Abrundung gebildet ist, wobei der Lüfter (111) durch die Deckscheibe (301) im Querschnitt einen viertelkreisförmigen Abschnitt (305) aufweist, an den sich die äußere zylindrische Mantelfläche (304) anschließt.

5. Getriebe nach Anspruch 4,
bei dem der Lüfter (111) in einem inneren radialen Abschnitt eine Scheibe (306) mit mehreren um einen ersten vorgebbaren Winkel versetzt zueinander angeordneten Durchtrittsöffnungen (307) aufweist, und bei dem die Scheibe (306) durch mehrere um einen zweiten vorgebbaren Winkel versetzt zueinander angeordnete sich radial nach außen erstreckende Lamellen (308) mit der Deckscheibe (301) verbunden ist.

6. Getriebe nach einem der Ansprüche 1 bis 5,
bei dem zur Kühlung ausschließlich das Bündel mehrerer Heatpipes (109), der Konvektionskühlkörper (110) und der Lüfter (111) vorgesehen sind.

7. Getriebe nach einem der Ansprüche 1 bis 6,
bei dem der Lüfter (111) drehfest mit der Antriebswelle (102) oder Antriebswelle (103) verbunden ist.

## Claims

1. Gear for industrial applications, with
- at least one drive shaft (102) and at least one output shaft (103), which pass through a respective orifice on a gear case (101),
- at least one gearwheel connected to the drive shaft (102) and at least one gearwheel connected to the output shaft (103), said gearwheels being in engagement indirectly or directly with one another,
- a bundle of a plurality of heat pipes (109) which are arranged in each case on a first portion in the region of a lubricant sump (108) and which are connected thermally to this, evaporation of a heat pipe medium taking place in each case on the first portions of the heat pipes (109),
- a convection cooling body (110) which is arranged outside the gear case (101) and which is connected to second portions of the heat pipes (109), condensation of the heat pipe medium taking place in each case on the second portions of the heat pipes (109),
- a fan (111) connected to the drive shaft (102) or output shaft (103), in the flow region of which fan the convection cooling body (110) is arranged, wherein the convection cooling body (110) is integrated into a case cover.

2. Gear according to Claim 1, in which the convection cooling body (110) has cooling lamellae.

3. Gear according to either one of Claims 1 and 2, in which a fan which is temperature-regulated in terms of its rotational speed is provided.

4. Gear according to one of Claims 1 to 3, in which the fan (111) has on a first end face (302) an integrated rotationally symmetrical cover disk (301) which is configured as one quarter of a hollow torus, by virtue of which a rounding is formed on the first end face (302), on an outer cylindrical surface area (304) of the fan (111) which extends between the first end face (302) and a second end face (303), wherein, by virtue of the cover disk (301), the fan (111) has in cross section a portion (305) which is in the form of a quarter circle and which the outer cylindrical surface area (304) adjoins.

5. Gear according to Claim 4, in which the fan (111) has in an inner radial portion a disk (306) with a plurality of passage orifices (307) arranged so as to be offset with respect to one another by a first predeterminable angle, and in which the disk (306) is connected to the cover disk (301) by means of a plurality of radially outward-extending lamellae (308) arranged so as to be offset with respect to one another by a second predeterminable angle.

6. Gear according to one of Claims 1 to 5, in which only the bundle of a plurality of heat pipes (109), the convection cooling body (110) and the fan (111) are provided for cooling.

7. Gear according to one of Claims 1 to 6, in which the fan (111) is connected fixedly in terms of rotation to the drive shaft (102) or output shaft (103).

## Revendications

1. Engrenage pour des applications industrielles, comprenant
- au moins un arbre (102) menant et au moins un arbre ( 103) mené, qui passent dans une ouverture respective d'un carter ( 101 ) d'engrenage,
- au moins une roue dentée reliée à l'arbre ( 102 ) menant et au moins une roue dentée reliée à l'arbre ( 103 ) mené, qui sont en prise entre elles directement ou indirectement,
- un faisceau de plusieurs heatpipes (109), qui sont disposés respectivement sur une première partie dans la zone d'un bain ( 108 ) de lubrifiant et qui sont reliés thermiquement à celui-ci, une évaporation d'un fluide de heatpipe s'effectuant respectivement sur les premières parties des heatpipes ( 109 ),
- un dissipateur ( 110 ) de chaleur par convexion, qui est monté à l'extérieur du carter ( 101 ) d'engrenage et qui est relié à des deuxièmes parties des heatpipes ( 109 ), une condensation du fluide de heatpipe s'effectuant respectivement sur les deuxièmes parties des heatpipes ( 109 ),
- un ventilateur (111), qui est relié à l'arbre ( 102 ) menant ou à l'arbre (103) mené, et dans la zone d'écoulement duquel est monté le dissipateur (110) de chaleur par convexion, le dissipateur ( 110 ) de chaleur par convexion étant intégré dans un couvercle du carter.

2. Engrenage suivant la revendication 1,
dans lequel le dissipateur ( 110 ) de chaleur par convexion a des lamelles de refroidissement.

3. Engrenage suivant l'une des revendications 1 et 2,
dans lequel il est prévu un ventilateur, dont la vitesse de rotation est réglée en fonction de la température.

4. Engrenage suivant l'une des revendications 1 à 3,
dans lequel le ventilateur (111) a, sur un premier côté ( 302 ) frontal, un flasque ( 301 ) intégré de révolution, qui est conformé en quart d'un tore creux, par lequel il est formé un arrondi, sur le premier côté (302) frontal, sur une surface ( 304 ) latérale cylindrique extérieure du ventilateur ( 111 ), qui s'étend entre le premier côté ( 302 ) frontal et un deuxième côté ( 303 ) frontal, le ventilateur ayant, par le flasque ( 301 ), en section transversale, une partie ( 305 ) en forme de quart de cercle, à laquelle se raccorde la surface ( 304 ) latérale extérieure cylindrique.

5. Engrenage suivant la revendication 4,
dans lequel le ventilateur (111) a, dans une partie intérieure radiale, un disque (306) ayant plusieurs ouvertures ( 307 ) traversantes décalées les unes par rapport aux autres d'un premier angle pouvant être prescrit, et dans lequel le disque (306) est relié au flasque (301) par plusieurs lamelles (108) s'étendant radialement vers l'extérieur et décalées les unes par rapport aux autres d'un deuxième angle pouvant être prescrit.

6. Engrenage suivant l'une des revendications 1 à 5,
dans lequel, pour le refroidissement, est prévu exclusivement le faisceau de plusieurs heatpipes ( 109 ), le dissipateur ( 110 ) de chaleur par convexion et le ventilateur ( 111 ).

7. Engrenage suivant l'une des revendications 1 à 6,
**caractérisé en ce que** le ventilateur ( 111 ) est solidaire en rotation de l'arbre ( 102 ) menant ou de l'arbre ( 103 ) mené.
